# EUROPEAN PATENT APPLICATION

(11) **EP 4 459 256 A1**
(43) Date of publication of application: **06.11.2024**
(21) Application number: 22915493.5
(22) Date of filing: 26.10.2022
(51) Int. Cl.: G01N 1/04, G01N 1/34, B01F 21/00, B01F 23/40, B01F 35/71, B03B 5/36

(54) **REFINING DEVICE AND CONTROL METHOD FOR REFINING DEVICE**

(30) Priority: 28.12.2021 JP 2021214614
(71) Applicant: SHIMADZU CORPORATION, Kyoto-shi, Kyoto 604-8511 (JP)
(72) Inventor: IKEZAWA, Yoshio, Kyoto-shi, Kyoto 604-8511 (JP)
(74) Representative: Kilian Kilian & Partner mbB
(86) International application number: PCT/JP2022/039821
(87) International publication number: WO 2023/127259

(57) **Abstract**

A purification apparatus that purifies a sample includes a container and a controller. A sample is accommodated in the container, and a decomposition solution containing a decomposition substance that decomposes a contaminant in the sample is introduced into the container. The controller is configured to introduce the decomposition solution into the container a plurality of times. Introduction of the decomposition solution the plurality of times includes first introduction and second introduction that follows. An amount of the decomposition substance in the decomposition solution introduced in the second introduction is larger than an amount of the decomposition substance in the decomposition solution introduced in the first introduction.

## Description

### TECHNICAL FIELD

The present invention relates to a purification apparatus and a method of controlling a purification apparatus.

### BACKGROUND ART

In order to collect a component to be collected, a mixed sample containing the component has been purified. NPL 1 discloses a purification instrument that collects microplastic contained in a mixed sample collected from the sea, based on gravity separation of the mixed sample with the use of a heavy solution.

### CITATION LIST

### NON PATENT LITERATURE

NPL 1: Hannes K. Imhof et al., "A novel, highly efficient method for the separation and quantification of plastic particles in sediments of aquatic environments," LIMNOLOGY and OCEANOGRAPHY: METHODS, Volume 10, Issue 7, pp. 524-537, 17 July 2012, https://doi.org/10.4319/lom.2012.10.524

### SUMMARY OF INVENTION

### TECHNICAL PROBLEM

In such a purification instrument, before gravity separation with the use of the heavy solution, a contaminant contained in the mixed sample is decomposed with a decomposition solution. In decomposition with the decomposition solution, addition of the decomposition solution at a high concentration to a sample in which a large amount of contaminant remains causes air bubbles due to overreaction, which may interfere subsequent reaction. When the concentration of the decomposition solution is too low, on the other hand, decomposition reaction is hard to proceed and may not be completed in time. In view of such circumstances, a method of appropriately completing decomposition with a decomposition solution and reducing a remaining contaminant has been demanded.

### SOLUTION TO PROBLEM

A purification apparatus according to a first aspect of the present disclosure is a purification apparatus that purifies a sample. The purification apparatus includes a container and a controller. The sample is accommodated in the container, and a decomposition solution containing a decomposition substance that decomposes a contaminant in the sample is introduced into the container. The controller is configured to introduce the decomposition solution a plurality of times into the container. Introduction of the decomposition solution the plurality of times includes first introduction and second introduction that follows. An amount of the decomposition substance in the decomposition solution introduced in the second introduction is larger than an amount of the decomposition substance in the decomposition solution introduced in the first introduction.

A control method according to a second aspect of the present disclosure is a control method performed by a controller in a purification apparatus that purifies a sample. The purification apparatus includes a container and a controller. The sample is accommodated in the container, and a decomposition solution containing a decomposition substance that decomposes a contaminant in the sample is introduced into the container. The controller is configured to introduce the decomposition solution into the container a plurality of times, introduction of the decomposition solution including first introduction and second introduction. The control method includes performing the first introduction and performing the second introduction. In the performing the second introduction, an amount of the decomposition substance in the decomposition solution introduced in the second introduction is larger than an amount of the decomposition substance in the decomposition solution introduced in the first introduction.

### ADVANTAGEOUS EFFECTS OF INVENTION

According to the purification apparatus according to the present disclosure, the decomposition solution is introduced into the container a plurality of times including first introduction and second introduction that follows, and the amount of the decomposition substance contained in the decomposition solution is larger in later introduction. Thus, in the first introduction in which a large amount of undecomposed contaminant is contained in the sample, the contaminant can gently be decomposed by a relatively small amount of the decomposition substance. Addition of a larger amount of the decomposition substance than in the first introduction while there is less undecomposed contaminant can reliably decompose the remaining contaminant. Therefore, decomposition with the decomposition solution can appropriately be completed and a contaminant residue in a mixed sample can be reduced.

### BRIEF DESCRIPTION OF DRAWINGS

Fig. 1 is a diagram schematically showing a purification apparatus according to an embodiment.
Fig. 2 is a diagram for illustrating a hardware configuration of the purification apparatus.
Fig. 3 is a flowchart of purification processing performed by the purification apparatus.
Fig. 4 is a flowchart of decomposition treatment in a comparative example.
Fig. 5 is a flowchart of decomposition treatment in the embodiment.
Fig. 6 is a flowchart of decomposition treatment in a first embodiment.
Fig. 7 is a flowchart of decomposition treatment in a second embodiment.
Fig. 8 is a diagram schematically showing a purification apparatus according to a modification.
Fig. 9 is a flowchart of decomposition treatment in the modification.

### DESCRIPTION OF EMBODIMENTS

The present embodiment will be described in detail with reference to the drawings. The same or corresponding elements in the drawings have the same reference characters allotted and description thereof will not be repeated in principle.

### [1. Configuration of Purification Apparatus]

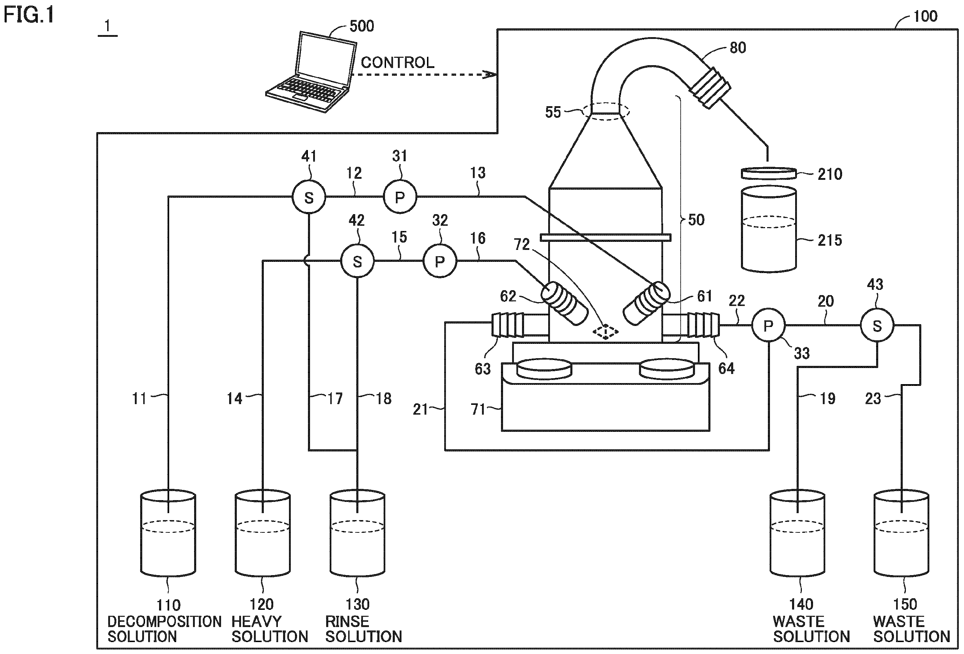

A main configuration of a purification apparatus 1 according to an embodiment will be described with reference to Fig. 1. Fig. 1 is a diagram schematically showing purification apparatus 1 according to the embodiment. As shown in Fig. 1, purification apparatus 1 includes a purification instrument 100 that purifies a mixed sample and a controller 500 that controls purification instrument 100. Purification apparatus 1 according to the embodiment purifies the mixed sample under the control of purification instrument 100 by controller 500 to collect a component to be collected that is contained in the mixed sample. "Purification" encompasses taking a pure substance (component) out of a mixture.

Any form of a mixed sample may be applicable so long as a "mixed sample" to be purified by purification apparatus 1 contains a component to be collected. Exemplary "mixed samples" include seawater and sand collected from the sea or the seashore and processed products such as food and cosmetics. In the embodiment, seawater and sand collected from the sea or the seashore represent an exemplary "mixed sample." The "mixed sample" is also simply referred to as a "sample" below.

Any component to be collected by purification apparatus 1 may be applicable as the "component" to be collected by purification apparatus 1. Exemplary "components" include microplastic which is fine plastic particles having a size not larger than 5 mm. In the embodiment, microplastic contained in seawater and sand collected from the sea or the seashore represents an exemplary "component".

Purification instrument 100 includes a container 50 where a sample is accommodated, pipes 11 to 22, pumps 31 to 33, electromagnetic valves 41 to 43, ports 61 to 64, a stirrer 71, a stirring bar 72, a discharge pipe 80, a decomposition solution reservoir 110, a heavy solution reservoir 120, a rinse solution reservoir 130, waste solution reservoirs 140 and 150, a detection filter 210, and a supernatant reservoir 215.

Pipe 11 connects decomposition solution reservoir 110 and electromagnetic valve 41 to each other. Pipe 12 connects electromagnetic valve 41 and pump 31 to each other. Pipe 13 connects pump 31 and port 61 provided in an outer circumferential portion of container 50 to each other. Decomposition solution reservoir 110 and port 61 of container 50 are thus connected to each other through pipes 11, 12, and 13 with electromagnetic valve 41 and pump 31 being interposed.

Pipe 14 connects heavy solution reservoir 120 and electromagnetic valve 42 to each other. Pipe 15 connects electromagnetic valve 42 and pump 32 to each other. Pipe 16 connects pump 32 and port 62 provided in the outer circumferential portion of container 50 to each other. Heavy solution reservoir 120 and port 62 of container 50 are thus connected to each other through pipes 14, 15, and 16 with electromagnetic valve 42 and pump 32 being interposed.

Pipe 17 connects rinse solution reservoir 130 and electromagnetic valve 41 to each other. In other words, while electromagnetic valve 41 is connected to decomposition solution reservoir 110 through pipe 11, it is connected also to rinse solution reservoir 130 through pipe 14. Rinse solution reservoir 130 and port 61 of container 50 are thus connected to each other through pipes 17, 12, and 13 with electromagnetic valve 41 and pump 31 being interposed.

Pipe 18 connects rinse solution reservoir 130 and electromagnetic valve 42 to each other. In other words, while electromagnetic valve 42 is connected to heavy solution reservoir 120 through pipe 14, it is connected also to rinse solution reservoir 130 through pipe 18. Rinse solution reservoir 130 and port 62 of container 50 are thus connected to each other through pipes 18, 15, and 16 with electromagnetic valve 42 and pump 32 being interposed.

Pipe 19 connects waste solution reservoir 140 and electromagnetic valve 43 to each other. Pipe 20 connects electromagnetic valve 43 and pump 33 to each other. Pipe 21 connects pump 33 and port 63 provided in the outer circumferential portion of container 50 to each other. Waste solution reservoir 140 and port 63 of container 50 are thus connected to each other through pipes 19, 20, and 21 with electromagnetic valve 43 and pump 33 being interposed.

Pipe 22 connects pump 33 and port 64 provided in the outer circumferential portion of container 50 to each other. In other words, while pump 33 is connected to port 63 of container 50 through pipe 21, it is connected also to port 64 of container 50 through pipe 22. Waste solution reservoir 140 and port 64 of container 50 are thus connected to each other through pipes 19, 20, and 22 with electromagnetic valve 43 and pump 33 being interposed.

A pipe 23 connects waste solution reservoir 150 and electromagnetic valve 43 to each other. In other words, while electromagnetic valve 43 is connected to waste solution reservoir 140 through pipe 19, it is connected also to waste solution reservoir 150 through pipe 23. Waste solution reservoir 150 and port 63 of container 50 are thus connected to each other through pipes 23, 20, and 21 with electromagnetic valve 43 and pump 33 being interposed. Waste solution reservoir 150 and port 64 of container 50 are connected to each other through pipes 23, 20, and 22 with electromagnetic valve 43 and pump 33 being interposed.

A decomposition solution for treatment of a contaminant is stored in decomposition solution reservoir 110. The "contaminant" refers to a foreign matter in the mixed sample, other than a component to be collected. In the embodiment, an exemplary "contaminant" includes an organic contaminant having a property of an organic substance. Any "decomposition solution" may be applicable so long as the contaminant is decomposed therewith. In the embodiment, the "decomposition solution" decomposes an organic contaminant. An exemplary "decomposition solution" includes an oxidizing agent such as oxygenated water (H₂O₂) and a mixture of oxygenated water (H₂O₂) and iron (II) oxide (FeO). When seawater and sand are adopted as the "mixed sample," exemplary "organic contaminants" include a scrap piece of wood mixed in seawater or sand and planktons.

A heavy solution for separation of a sample based on a specific gravity difference is stored in heavy solution reservoir 120. Any heavy solution may be applicable so long as the "heavy solution" separates the sample based on the specific gravity difference. In the embodiment, the "heavy solution" allows an inorganic contaminant having a property of an inorganic substance to settle based on the specific gravity difference. Exemplary "heavy solutions" include sodium chloride (NaCl), sodium iodide (NaI), and zinc chloride (ZnCh). When seawater and sand are adopted as the "mixed sample," exemplary "inorganic contaminants" include sand, glass, and stone. A specific gravity of the "heavy solution" is set to be greater than a specific gravity of the "component" to be collected by purification apparatus 1 and to be smaller than a specific gravity of the "inorganic contaminant." For example, when microplastic is adopted as the "component" to be collected by purification apparatus 1 and sand, glass, stone, and the like are adopted as the "inorganic contaminant," the "heavy solution" should only be greater in specific gravity than microplastic and should only be smaller in specific gravity than sand, glass, stone, and the like. Specifically, the specific gravity of the "heavy solution" should only be set approximately to 1.5 to 1.7.

A rinse solution for cleaning of the inside of container 50 is stored in rinse solution reservoir 130. Any rinse solution may be applicable so long as the inside of container 50 is cleaned with the "rinse solution." An exemplary "rinse solution" includes water. The "rinse solution" plays a role to clean the inside of container 50 and a role to dilute the decomposition solution introduced into container 50.

A waste solution discharged from container 50 such as the heavy solution, the rinse solution, and sea water contained in the mixed sample is stored in waste solution reservoirs 140 and 150.

Pump 31 introduces the decomposition solution suctioned from decomposition solution reservoir 110 or the rinse solution suctioned from rinse solution reservoir 130 into container 50 through port 61 under the control by controller 500.

Pump 32 introduces the heavy solution suctioned from heavy solution reservoir 120 or the rinse solution suctioned from rinse solution reservoir 130 into container 50 through port 62 under the control by controller 500.

Pump 33 discharges the waste solution suctioned from container 50 through port 63 or port 64 to waste solution reservoir 140 or waste solution reservoir 150 under the control by controller 500.

Electromagnetic valve 41 is a regulation valve provided at a portion of joint of pipe 11 to pipe 17 and pipe 13. The decomposition solution introduced from pipe 11 and the rinse solution introduced from pipe 17 are introduced into electromagnetic valve 41 at a ratio in accordance with the opening of electromagnetic valve 41.

When the ratio between the decomposition solution and the rinse solution introduced into electromagnetic valve 41 is 1:0, the decomposition solution in decomposition solution reservoir 110 is introduced into container 50. When the ratio between the decomposition solution and the rinse solution introduced into electromagnetic valve 41 is 0:1, the rinse solution in rinse solution reservoir 130 is introduced into container 50. In other words, electromagnetic valve 41 can switch a path to be connected to port 61 between a path between decomposition solution reservoir 110 and port 61 of container 50 (a path through pipes 11, 12, and 13) and a path between rinse solution reservoir 130 and port 61 of container 50 (a path through pipes 17, 12, and 13) under the control by controller 500.

When the ratio between the decomposition solution and the rinse solution introduced into electromagnetic valve 41 is not 1:0 or 0:1, the decomposition solution and the rinse solution are mixed at that ratio in electromagnetic valve 41. In other words, in electromagnetic valve 41, the decomposition solution is diluted with the rinse solution based on that ratio. Therefore, controller 500 can control the concentration of the decomposition solution to be introduced into container 50, by controlling the opening of electromagnetic valve 41.

Electromagnetic valve 42 switches a path to be connected to port 62 between a path between heavy solution reservoir 120 and port 62 of container 50 (a path through pipes 14, 15, and 16) and a path between rinse solution reservoir 130 and port 62 of container 50 (a path through pipes 18, 15, and 16) under the control by controller 500.

Electromagnetic valve 43 switches a path to be connected to ports 63 and 64 between a path between waste solution reservoir 140 and ports 63 and 64 of container 50 (a path through pipes 19, 20, and 21 or a path through pipes 19, 20, and 22) and a path between waste solution reservoir 150 and ports 63 and 64 of container 50 (a path through pipes 23, 20, and 21 or a path through pipes 23, 20, and 22) under the control by controller 500.

The decomposition solution in decomposition solution reservoir 110 or the rinse solution in rinse solution reservoir 130 suctioned by pump 31 is introduced into container 50 through port 61. The heavy solution in heavy solution reservoir 120 or the rinse solution in rinse solution reservoir 130 suctioned by pump 32 is introduced into container 50 through port 62. The waste solution in container 50 suctioned by pump 33 is discharged to waste solution reservoir 140 or waste solution reservoir 150 through ports 63 and 64.

In the inside of each of ports 61 to 64, a filter (not shown) is provided not to allow discharge from container 50, of a component contained in the sample. The filter is a mesh having a mesh size small enough to trap microplastic to be collected. The filter (mesh) is, for example, a wire gauze made of steel use stainless (SUS) or a membrane filter made of polytetrafluoroethylene (PTFE) (Teflon^{™}). When microplastic is to be collected, the mesh size of the filter (mesh) should be small enough not to allow passage therethrough of a particle having a size of 0.1 to 5.0 mm, and the mesh size is preferably approximately 0.1 mm.

Stirrer 71 is, for example, a constant-temperature stirrer, and arranged below container 50. Stirrer 71 stirs the sample in container 50 by rotation of stirring bar 72 provided in container 50 under the control by controller 500. Furthermore, stirrer 71 keeps a temperature of the sample in container 50 constant by heating container 50 from below container 50 under the control by controller 500.

Discharge pipe 80 is connected to a discharge port 55 provided at an uppermost portion of container 50, and a supernatant of the sample that flows over from container 50 is discharged therethrough to the outside.

Detection filter 210 collects the component to be collected that is contained in the supernatant of the sample discharged through discharge pipe 80 by filtering the supernatant. The supernatant that has passed through detection filter 210 is collected in supernatant reservoir 215. Detection filter 210 is a mesh having a mesh size small enough to trap microplastic to be collected. Detection filter 210 (mesh) is, for example, a wire gauze made of SUS or a membrane filter made of PTFE (trademark). When microplastic is to be collected, the mesh size of detection filter 210 (mesh) should be small enough not to allow passage therethrough of a particle having a size of 0.1 to 5.0 mm, and the mesh size is preferably approximately 0.1 mm.

Controller 500 may be implemented by a general-purpose computer or a dedicated computer for controlling purification instrument 100. A part or the entirety of controller 500 may be constructed as dedicated hardware circuitry. Controller 500 controls pumps 31 to 33, electromagnetic valves 41 to 43, and stirrer 71 in purification instrument 100.

### [2. Hardware Configuration]

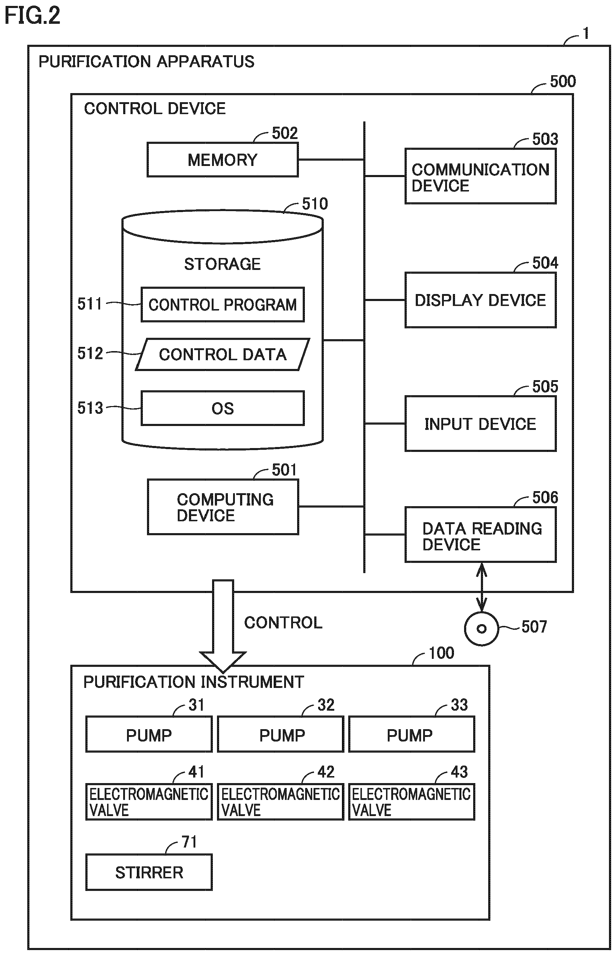

A hardware configuration of purification apparatus 1 according to the embodiment will be described with reference to Fig. 2. Fig. 2 is a diagram for illustrating a hardware configuration of purification apparatus 1 according to the embodiment. As shown in Fig. 2, controller 500 includes, as main hardware elements thereof, a computing device 501, a memory 502, a communication device 503, a display device 504, an input device 505, a data reading device 506, and a storage 510.

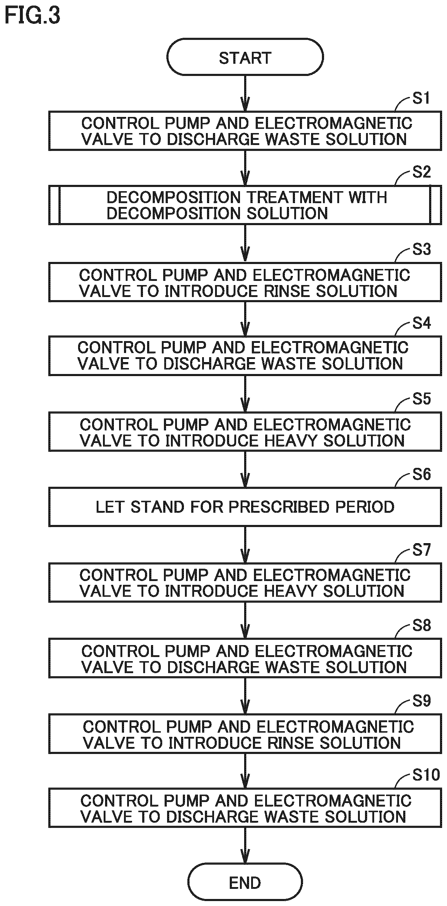

Computing device 501 is a computer that reads a program (for example, a control program 511 and an operating system (OS) 513) stored in storage 510 and develops the read program on memory 502 to execute the same. For example, computing device 501 performs purification processing (which will be described later with reference to Fig. 3) for controlling purification instrument 100 by executing control program 511. Computing device 501 is implemented, for example, by a central processing unit (CPU), a field programmable gate array (FPGA), a graphics processing unit (GPU), a multi processing unit (MPU), or the like. Computing device 501 may be implemented by processing circuitry.

Memory 502 provides a storage area where a program code or a work memory is temporarily stored in execution of any program by computing device 501. Memory 502 is implemented by a volatile memory such as a dynamic random access memory (DRAM) or a static random access memory (SRAM) or a non-volatile memory such as a read only memory (ROM) or a flash memory.

Communication device 503 transmits and receives data to and from another device over a network (not shown). Communication device 503 is in conformity with any communication scheme such as Ethernet^{®}, wireless local area network (LAN), and Bluetooth^{®}.

Display device 504 is implemented, for example, by a liquid crystal display (LCD), and shows a program design screen or an alert screen on the occurrence of an abnormal condition.

Input device 505 is implemented, for example, by a keyboard, a mouse, or the like, and used for input of design information by a user in design of a program. Input device 505 may include a start switch for starting purification processing by computing device 501.

Data reading device 506 reads data stored in a storage medium 507. Any storage medium such as a compact disc (CD), a digital versatile disc (DVD), or a universal serial bus (USB) memory may be applicable so long as various types of data can be stored in storage medium 507.

Storage 510 provides a storage area where various types of data required for purification processing or the like are stored. Storage 510 is implemented, for example, by a non-volatile memory device such as a hard disk drive (HDD) or a solid state drive (SSD). Control program 511, control data 512, and OS 513 are stored in storage 510.

Control program 511 is a program in which contents of purification processing are described, and executed by computing device 501. Control program 511 may be designed by a user with the use of input device 505, read from storage medium 507 by data reading device 506, or obtained through the network from another device such as a server by communication device 503.

Control data 512 is data used in execution of control program 511 by computing device 501. For example, control data 512 includes data such as a setting value for control of each of pumps 31 to 33, electromagnetic valves 41 to 43, and stirrer 71. Control data 512 may be inputted by a user with the use of input device 505, read from storage medium 507 by data reading device 506, or obtained through the network from another device such as a server by communication device 503.

OS 513 provides a basic function for computing device 501 to perform various types of processing.

### [3. Sample Purification Processing]

Sample purification processing will now be described with reference to Fig. 3. Fig. 3 is a flowchart of purification processing performed by purification apparatus 1. Each step shown in Fig. 3 is performed by execution of OS 513 and control program 511 by computing device 501 of controller 500. "S" in the drawings is used as abbreviation of "STEP".

For preparation, a user introduces a sample into container 50 of purification apparatus 1. For example, the user injects the sample into container 50 through a not-shown inlet. Thereafter, the user performs a start operation with the use of input device 505 of controller 500 to start control of purification instrument 100 by controller 500.

When controller 500 starts control of purification instrument 100, as shown in Fig. 3, controller 500 controls pump 33 and electromagnetic valve 43 to discharge the waste solution in container 50 to waste solution reservoir 150 through pipes 20 to 23 and ports 63 and 64 (S1). Microplastic or the like to be collected that is contained in the sample remains in container 50 without being discharged to the outside, owing to the filter provided in the inside of ports 63 and 64.

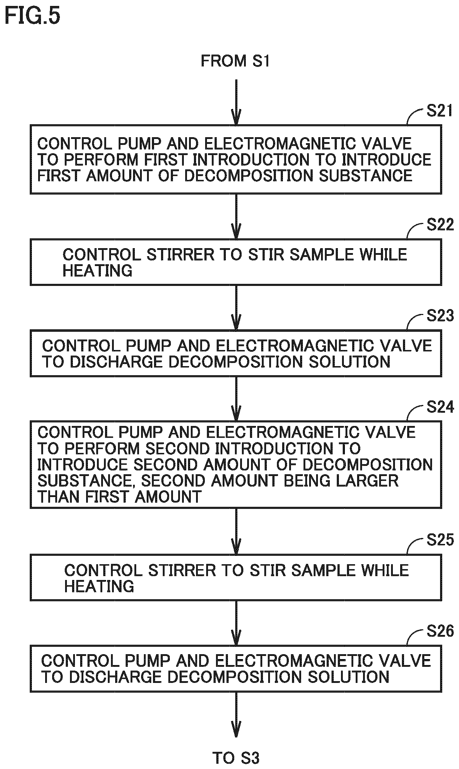

Controller 500 then performs decomposition treatment with the decomposition solution (S2). Details of S2 will be described later with reference to Figs. 5 to 7.

Controller 500 then deactivates pump 33 on a discharge side and controls pump 31 and electromagnetic valve 41 to introduce the rinse solution in rinse solution reservoir 130 into container 50 through pipes 17, 12, and 13 and port 61 to clean the inside of container 50 (S3). At this time, controller 500 controls an amount of suction by pump 31 to introduce the rinse solution in an amount set in advance by the user into container 50.

Controller 500 then controls pump 33 and electromagnetic valve 43 to discharge the waste solution in container 50 into which the rinse solution has been introduced to waste solution reservoir 150 through pipes 20 to 23 and ports 63 and 64 (S4). The inside of container 50 is thus cleaned with the rinse solution. Microplastic or the like to be collected that is contained in the sample remains in container 50 without being discharged to the outside, owing to the filter provided in the inside of ports 63 and 64. Thereafter, controller 500 may let the sample stand as it is for a prescribed period (for example, for one day) to dry the sample.

Controller 500 then controls pump 32 and electromagnetic valve 42 to introduce the heavy solution in heavy solution reservoir 120 into container 50 through pipes 14 to 16 and port 62 (S5). At this time, controller 500 controls the amount of suction by pump 32 to introduce the heavy solution in an amount set in advance by the user into container 50.

Thereafter, controller 500 lets the sample stand as it is for a prescribed period (for example, for one to three hours) (S6). As the heavy solution is thus introduced into the sample in container 50 and let stand, an inorganic contaminant contained in the sample settles around the bottom of container 50 owing to the specific gravity difference.

Controller 500 then again controls pump 32 and electromagnetic valve 42 to again introduce the heavy solution in heavy solution reservoir 120 into container 50 through pipes 14 to 16 and port 62 (S7). At this time, controller 500 controls the amount of suction by pump 32 to introduce the heavy solution in the amount set in advance by the user into container 50. As the heavy solution is thus introduced again into the sample in container 50, a fluid level of the sample separated based on the specific gravity gradually rises in container 50 and the supernatant of the sample soon reaches discharge port 55 of container 50. Then, the supernatant of the sample is discharged to the outside through discharge port 55 and discharge pipe 80.

The supernatant of the sample discharged through discharge pipe 80 is filtered by detection filter 210, and only the waste solution is collected in supernatant reservoir 215. Microplastic which is the component lighter in specific gravity than the heavy solution remains at detection filter 210.

After microplastic is collected as a result of purification of the sample, controller 500 has container 50 cleaned as post-treatment. Specifically, controller 500 controls pump 33 and electromagnetic valve 43 to discharge the waste solution in container 50 from which microplastic has been collected to waste solution reservoir 140 through pipes 19 to 22 and ports 63 and 64 (S8).

Controller 500 then deactivates pump 33 on the discharge side and controls pump 32 and electromagnetic valve 42 to introduce the rinse solution in rinse solution reservoir 130 into container 50 through pipes 18, 15, and 16 and port 62 to clean the inside of container 50 (S9). At this time, controller 500 controls the amount of suction by pump 32 to introduce the rinse solution in the amount set in advance by the user into container 50.

Controller 500 then controls pump 33 and electromagnetic valve 43 to discharge the waste solution in container 50 into which the rinse solution has been introduced to waste solution reservoir 140 through pipes 19 to 22 and ports 63 and 64 (S10). The inside of container 50 is thus cleaned with the rinse solution.

### [4. Decomposition Treatment in Comparative Example]

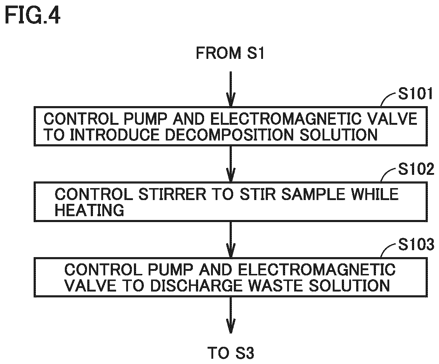

Fig. 4 is a flowchart of decomposition treatment in a comparative example. Each step shown in Fig. 4 is performed instead of S2 in the purification processing shown in Fig. 3. In other words, in one implementation of the comparative example, S101 to S103 in Fig. 4 are performed after S1 in Fig. 3, and S3 to S10 in Fig. 3 are performed after S101 to 103 in Fig. 4.

Referring to Fig. 4, controller 500 deactivates pump 33 on the discharge side and controls pump 31 and electromagnetic valve 41 to introduce the decomposition solution in decomposition solution reservoir 110 into container 50 through pipes 11 to 13 and port 61 (S101).

Controller 500 then controls stirrer 71 to rotate stirring bar 72 provided in container 50 to stir the sample while certain heat is applied to container 50 (S102). A temperature of container 50 and a rotation speed and a rotation time period of stirring bar 72 are set in advance by the user. As the sample is thus stirred, oxidation treatment with an oxidizing agent is performed and an organic contaminant contained in the sample is decomposed. Though heating is not necessarily required during stirring of the sample, decomposition by oxidation treatment tends to be accelerated by the temperature of the sample maintained constant by heating.

Controller 500 then controls pump 33 and electromagnetic valve 43 to discharge the waste solution in container 50 included in the sample in which the organic contaminant has been decomposed to waste solution reservoir 150 through pipes 20 to 23 and ports 63 and 64 (S 103). Microplastic or the like to be collected that is contained in the sample remains in container 50 without being discharged to the outside, owing to the filter provided in the inside of ports 63 and 64.

In the decomposition treatment in the comparative example shown in Fig. 4, for example, addition of the decomposition solution at a high concentration to the sample containing a large amount of contaminant may cause air bubbles due to overreaction, which may interfere subsequent decomposition reaction. In this case, the contaminant in the sample may not consequently completely be decomposed. In contrast, when the concentration of oxygenated water is too low, decomposition proceeds too slowly and the contaminant may not completely be decomposed in time. Then, purification apparatus 1 according to the present embodiment controls introduction such that the decomposition solution is introduced a plurality of times and the amount of the decomposition substance in the decomposition solution is larger in the later introduced decomposition solution. Thus, in preceding introduction in which the amount of the contaminant is large in the sample, reaction can gently proceed, with the decomposition substance being smaller in amount than in introduction that follows. In the introduction that follows in which there is less undecomposed contaminant owing to the preceding introduction, the remaining contaminant can thoroughly be decomposed by the decomposition substance larger in amount than in the preceding introduction. A contaminant residue after the decomposition treatment can thus be reduced.

### [5. Decomposition Treatment in Present Embodiment]

Fig. 5 is a flowchart of decomposition treatment in the embodiment. Each step shown in Fig. 5 is performed by execution of OS 513 and control program 511 by computing device 501 of controller 500.

Each step shown in Fig. 5 corresponds to a sub routine of S2 in Fig. 3. In other words, computing device 501 performs S21 to 26 in Fig. 5 after S1 in Fig. 3 and thereafter performs S3 to S10 in Fig. 3.

Referring to Fig. 5, in S21, computing device 501 controls pump 31 and electromagnetic valve 41 to introduce a first amount of the decomposition substance into container 50. This introduction is referred to as first introduction below.

In S22, computing device 501 controls stirrer 71 to rotate stirring bar 72 provided in container 50 to stir the sample while certain heat is applied to container 50. A temperature of container 50 and a rotation speed and a rotation time period of stirring bar 72 are set in advance by the user. As the sample is thus stirred, oxidation treatment with an oxidizing agent is performed and an organic contaminant contained in the sample is decomposed. Though heating is not necessarily required during stirring of the sample, decomposition by oxidation treatment tends to be accelerated by the temperature of the sample maintained constant by heating.

In S23, computing device 501 controls pump 33 and electromagnetic valve 43 to discharge the decomposition solution from container 50.

In S24, computing device 501 controls pump 31 and electromagnetic valve 41 to introduce a second amount of the decomposition substance into container 50, the second amount being larger than the first amount. This introduction is referred to as second introduction below.

In S25, computing device 501 controls stirrer 71 to rotate stirring bar 72 provided in container 50 to stir the sample while certain heat is applied to container 50. A temperature of container 50 and a rotation speed and a rotation time period of stirring bar 72 may be, for example, the same as or different from setting values thereof in S22.

In S26, computing device 501 controls pump 33 and electromagnetic valve 43 to discharge the decomposition solution from container 50.

According to the treatment shown in Fig. 5, in the first introduction, the first amount of the decomposition substance is introduced, the first amount being smaller than the second amount, so as not to cause overreaction with the contaminant in the sample, and hence reaction can gently proceed. By introducing the second amount of the decomposition substance in the second introduction with the contaminant having been reduced, the second amount being larger than the first amount, the remaining contaminant can reliably be decomposed. The amount of the contaminant that will remain after the decomposition treatment can thus be reduced.

Introduction may be performed three or more times, without being limited to two times. For example, the decomposition solution may be introduced at least once, for example, at at least one timing of timing before the first introduction, timing between the first introduction and the second introduction, and timing after the second introduction. In that case again, computing device 501 controls introduction such that the decomposition substance larger in amount than in preceding introduction is introduced in introduction that follows.

As shown in Fig. 5, after decomposition treatment for a prescribed period after introduction of the decomposition solution, desirably, the decomposition solution is discharged from container 50 and then next introduction is performed. This is because the decomposition solution to be introduced in next introduction is prevented from being diluted with the decomposition solution introduced in the preceding introduction. Furthermore, as a result of discharge of the contaminant decomposed in the preceding introduction, such a decomposed contaminant can be prevented from interfering with decomposition reaction in next introduction. When there is a relatively large amount of the decomposition substance in the decomposition solution to be introduced in next introduction and decomposition capability higher than that of the decomposition solution introduced in the preceding introduction is kept in spite of dilution with the decomposition solution introduced in the preceding introduction or presence of the decomposed contaminant, discharge of the decomposition solution before next introduction is not necessarily essential.

The amount of the decomposition substance in the decomposition solution in the plurality of times of introduction is controlled, for example, based on the amount and/or the concentration of the decomposition solution. Control of the amount and the concentration of the decomposition solution will now be described.

### (5-1. First Embodiment)

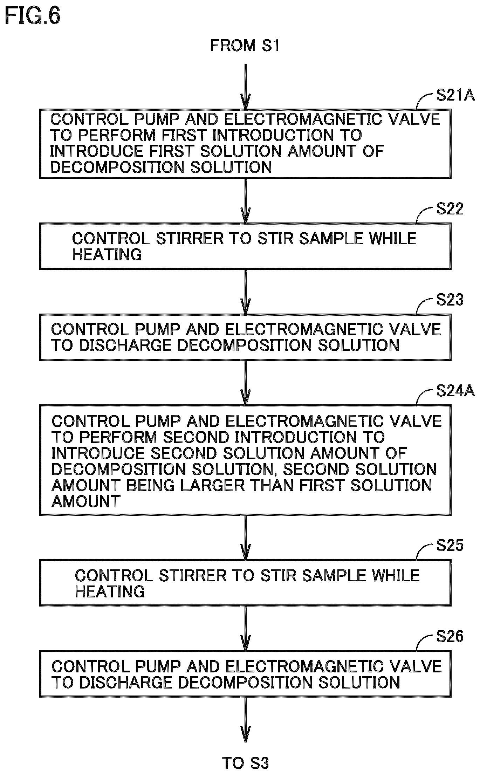

A method of controlling the amount of the decomposition substance by controlling the amount of the decomposition solution will initially be described. Fig. 6 is a flowchart of decomposition treatment in a first embodiment. In Fig. 6, S21 and S24 in Fig. 5 are modified to S21A and S24A. S21A and S24A in Fig. 6 are one implementation of S21 and S24 in Fig. 5. Since other steps in Fig. 6 correspond to other steps in Fig. 5, description thereof will not be provided. S21A and S24A are performed by execution of OS 513 and control program 511 by computing device 501 of controller 500.

In S21A, computing device 501 controls pump 31 and electromagnetic valve 41 to perform first introduction to introduce a first solution amount of the decomposition solution into container 50. Specifically, computing device 501 controls pump 31 to rotate at a prescribed number of rotations for a prescribed rotation time period corresponding to the first solution amount. In addition, computing device 501 controls the opening of electromagnetic valve 41 to a prescribed opening. In one implementation, computing device 501 controls the opening of electromagnetic valve 41 such that only the decomposition solution in decomposition solution reservoir 110 is introduced into container 50. The decomposition substance in the first solution amount of the decomposition solution corresponds to the first amount.

In S24A, computing device 501 controls pump 31 and electromagnetic valve 41 to perform second introduction to introduce a second solution amount of the decomposition solution into container 50, the second solution amount being larger than the first solution amount. The concentration of the decomposition solution introduced in the second introduction is controlled to be the same as the concentration of the decomposition solution introduced in the first introduction. According to such a configuration, the amount of the decomposition substance introduced in the second introduction is larger than the amount of the decomposition substance introduced in the first introduction.

Specifically, in S24A, computing device 501 controls pump 31 to rotate at a prescribed number of rotations for a prescribed rotation time period corresponding to the second solution amount. In addition, computing device 501 controls the opening of electromagnetic valve 41 to be the same as the prescribed opening in S21A. The amount of the decomposition substance in the second solution amount of the decomposition solution corresponds to the second amount.

Computing device 501 can thus control the amount of the decomposition substance by controlling the amount of the decomposition solution to be introduced from decomposition solution reservoir 110 into container 50 by controlling pump 31.

In S21A and S24A, computing device 501 controls the amount of the decomposition solution to be introduced, by controlling the rotation speed and the rotation time period of pump 31. According to such a configuration, pump 31 that provides driving force for introduction of the decomposition solution into container 50 can also be applied to control of the amount of the decomposition solution to be introduced. In other words, the amount of the decomposition solution to be introduced can be controlled with a simplified configuration.

Control of the amount of the decomposition solution to be introduced, however, is not limited as such. A sensor (not shown) that detects an amount may be provided in purification instrument 100, and computing device 501 may control the amount based on a detection value from the sensor. The sensor is, for example, a solution amount sensor (for example, a weight sensor and/or a fluid level sensor) that detects a solution amount in container 50, a sensor (for example, a flow rate sensor provided in pipe 16) that detects an amount of the decomposition solution introduced into container 50, and/or a solution amount sensor that detects an amount of the decomposition solution that remains in decomposition solution reservoir 110. The amount of the decomposition solution may be controlled by preparing two decomposition solution reservoirs in which the first amount of the decomposition solution and the second amount of the decomposition solution are stored, respectively, using in the first introduction, all of the decomposition solution in the decomposition solution reservoir where the first amount of the decomposition solution is stored, and using in the second introduction, all of the decomposition solution in the decomposition solution reservoir where the second amount of the decomposition solution is stored. Control of the amount of the decomposition solution to be introduced from a single decomposition solution reservoir 110 into container 50, however, can be more simplified in configuration for control of the amount of the decomposition solution to be introduced in container 50.

As a result of control such that the amount of the decomposition solution introduced in the second introduction is larger than the amount of the decomposition solution introduced in the first introduction, even when some of the sample adheres to an inner wall of the container around the fluid level in the decomposition treatment in the first introduction, the fluid level is higher in the second introduction, and hence the sample that adheres can also be decomposed.

### (5-2. Second Embodiment)

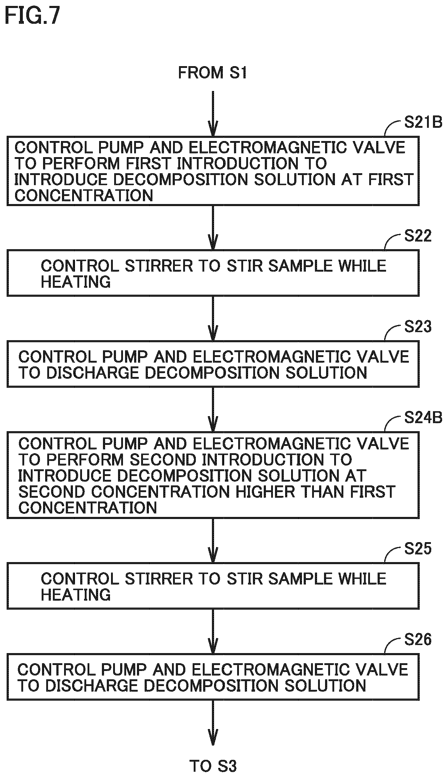

A method of controlling the amount of the decomposition substance by controlling the concentration of the decomposition solution will now be described. Fig. 7 is a flowchart of decomposition treatment in a second embodiment. In Fig. 7, S21 and S24 in Fig. 5 are modified to S21B and S24B. S21B and S24B in Fig. 7 are one implementation of S21 and S24 in Fig. 5. Since other steps in Fig. 7 correspond to other steps in Fig. 5, description thereof will not be provided. S21B and S24B are performed by execution of OS 513 and control program 511 by computing device 501 of controller 500.

In S21B, computing device 501 controls pump 31 and electromagnetic valve 41 to perform first introduction to introduce the decomposition solution at a first concentration into container 50. Specifically, computing device 501 controls pump 31 to rotate at a prescribed number of rotations for a prescribed rotation time period corresponding to a prescribed solution amount. In addition, computing device 501 controls the opening of electromagnetic valve 41 to a prescribed opening. In one implementation, computing device 501 controls the opening of electromagnetic valve 41 such that a rinse solution several times as much as the decomposition solution is introduced into electromagnetic valve 41. The decomposition solution diluted with the rinse solution at a severalfold dilution factor is thus introduced into container 50. The decomposition substance in the decomposition solution at the first concentration corresponds to the first amount.

In S24B, computing device 501 controls pump 31 and electromagnetic valve 41 to perform second introduction to introduce into container 50, the decomposition solution at a second concentration higher than the first concentration. The solution amount of the decomposition solution introduced in the second introduction is controlled to be the same as the solution amount of the decomposition solution introduced in the first introduction. According to such a configuration, the amount of the decomposition substance introduced in the second introduction is larger than the amount of the decomposition substance introduced in the first introduction.

Specifically, in S24B, computing device 501 controls pump 31 to rotate at the rotation speed for the rotation time period the same as those in the first introduction. In addition, computing device 501 controls the opening of electromagnetic valve 41 such that the ratio of the decomposition solution is higher than that when the prescribed opening is set in S21B. In one implementation, computing device 501 controls the opening of electromagnetic valve 41 such that only the decomposition solution in decomposition solution reservoir 110 is introduced into electromagnetic valve 41. The undiluted decomposition solution is thus introduced into container 50. The amount of the decomposition substance in the second solution amount of the decomposition solution corresponds to the second amount.

Computing device 501 can thus control the amount of the decomposition substance by controlling the concentration of the decomposition solution to be introduced into container 50, by controlling electromagnetic valve 41.

In S21B and S24B, computing device 501 controls the concentration of the decomposition solution by controlling the opening of electromagnetic valve 41 to dilute the decomposition solution with the rinse solution at the dilution factor in accordance with the opening. According to such a configuration, the rinse solution for cleaning of container 50 can also be applied to control of the concentration of the decomposition solution. In addition, electromagnetic valve 41 that switches between introduction of the decomposition solution into container 50 and introduction of the rinse solution into container 50 can also be applied to control of the concentration of the decomposition solution to be introduced into container 50. In other words, the concentration of the decomposition solution can be controlled with a simplified configuration.

Control of the concentration of the decomposition solution, however, is not limited as such. For example, the configuration may be such that two decomposition solution reservoirs where the decomposition solution at the first concentration and the decomposition solution at the second introduction are stored, respectively, are prepared, the decomposition solution in the decomposition solution reservoir where the decomposition solution at the first concentration is stored is used in the first introduction, and the decomposition solution in the decomposition solution reservoir where the decomposition solution at the second concentration is stored is used in the second introduction.

Alternatively, the configuration may be such that a pipe connected to rinse solution reservoir 130 is provided in container 50 independently of the pipe connected to decomposition solution reservoir 110 and the decomposition solution and the rinse solution are each introduced into container 50 and mixed therein. The configuration in which the decomposition solution and the rinse solution are mixed in electromagnetic valve 41, however, is superior in that the concentration of the decomposition solution may generally be uniform at the time point of addition thereof to the sample.

As shown in Figs. 6 and 7, purification apparatus 1 controls the amount or the concentration of the decomposition solution such that the amount of the decomposition substance in the decomposition solution introduced in the second introduction is larger than the amount of the decomposition substance in the decomposition solution introduced in the first introduction. Thus, in the first introduction in which there is a large amount of the contaminant, decomposition treatment is gently performed, and in the second introduction in which there is less contaminant, decomposition treatment can reliably be completed. Therefore, a contaminant residue in the sample after decomposition with the decomposition solution can be reduced.

Naturally, purification apparatus 1 may change in the second introduction, both of the amount and the concentration of the decomposition solution to be introduced into container 50 such that the amount of the decomposition substance in the decomposition solution is larger in the second introduction than in the first introduction.

### [6. Modification]

In a modification, before decomposition treatment with the decomposition solution described in the embodiment above, processing for determining the amount of the decomposition substance to be introduced in each of the first introduction and the second introduction is performed based on at least one of the amount of the sample accommodated in container 50 and the amount of the contaminant in the sample.

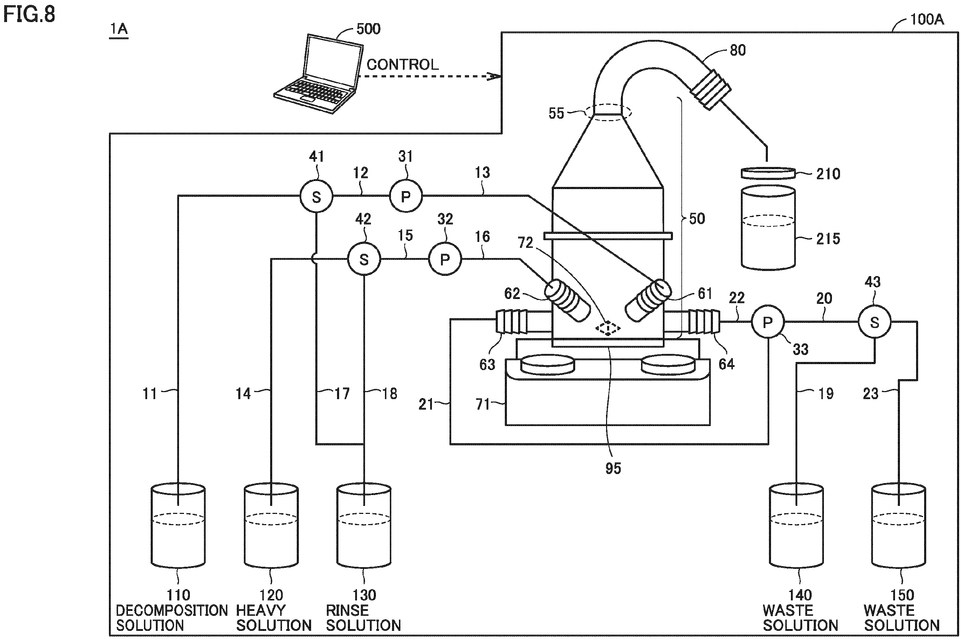

Fig. 8 is a diagram schematically showing a purification apparatus according to the modification. A purification instrument 100A in a purification apparatus 1A in Fig. 8 includes a weight sensor 95 in addition to the configuration of purification instrument 100 in purification apparatus 1 in Fig. 1.

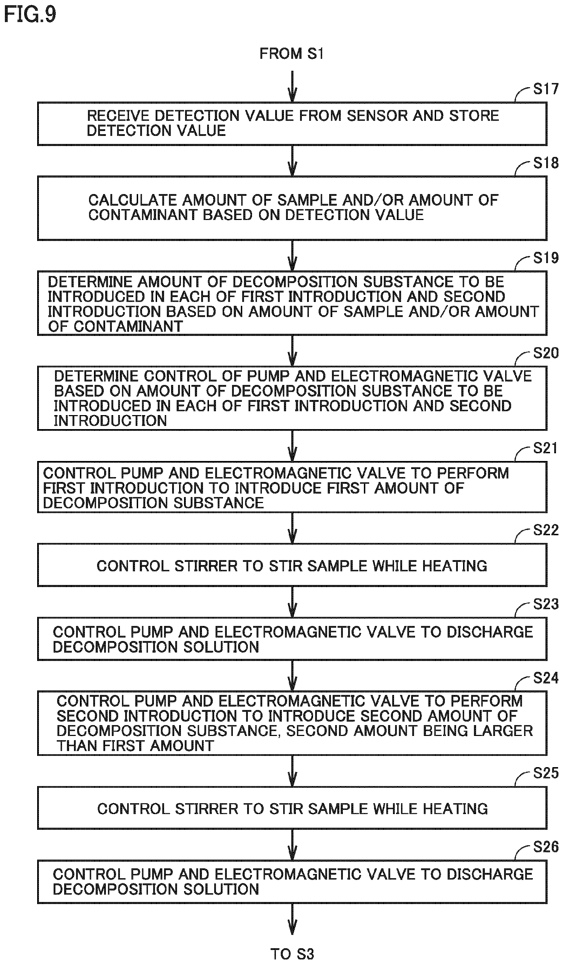

Weight sensor 95 is a sensor that detects a weight of a substance accommodated in the container. A detection value from weight sensor 95 is transmitted to controller 500. Processing performed by controller 500 upon receiving the detection value will be described with reference to Fig. 9.

Fig. 9 is a flowchart of decomposition treatment in the modification. The flowchart in Fig. 9 additionally includes S17 to S20 prior to S21 in the flowchart in Fig. 5. S17 to S20 are performed by execution of OS 513 and control program 511 by computing device 501 of controller 500.

In S17, computing device 501 receives the detection value from weight sensor 95 and stores the detection value.

In S18, computing device 501 calculates the amount of the sample and/or the amount of the contaminant based on the detection value. In one implementation, in controller 500, a ratio of the contaminant in the sample is stored in storage medium 507. Computing device 501 initially calculates the amount of the sample based on the detection value. Computing device 501 then calculates the amount of the contaminant by multiplying the calculated amount of the sample by the ratio of the contaminant.

In S19, computing device 501 determines the amount of the decomposition substance to be introduced in each of the first introduction and the second introduction based on the amount of the sample and/or the amount of the contaminant. In one implementation, in controller 500, data indicating relation between the "amount of the sample and/or the contaminant" and the "amount of the decomposition substance to preferably be introduced in each of the first introduction and the second introduction" is stored in storage medium 507. The data indicating the relation is stored, for example, in a form of a mathematical expression, a graph, or a table. Computing device 501 reads from the data indicating the relation, the "amount of the decomposition substance to preferably be introduced in each of the first introduction and the second introduction" corresponding to the calculated "amount of the sample and/or the contaminant." Controller 500 then determines the "amount of the decomposition substance to preferably be introduced in each of the first introduction and the second introduction" as the amount of the decomposition substance to be introduced in each of the first introduction and the second introduction.

In S20, computing device 501 determines control of pump 31 and electromagnetic valve 41 in each of the first introduction and the second introduction based on the amount of the decomposition substance to be introduced in each of the first introduction and the second introduction. In one implementation, computing device 501 determines the amount and the concentration of the decomposition solution to be introduced in each of the first introduction and the second introduction based on the amount of the decomposition substance to be introduced in each of the first introduction and the second introduction. Computing device 501 then determines the rotation speed and the rotation time period of pump 31 and the opening of electromagnetic valve 41 that realize the amount and the concentration of the decomposition solution to be introduced in each of the first introduction and the second introduction.

The sensor that detects the amount of the sample accommodated in the container may be a sensor that detects the amount of the contaminant in the sample. Such a sensor is not limited to weight sensor 95, and for example, a fluid level sensor (not shown) provided in container 50 may be applicable. Another sensor such as a concentration sensor or a turbidity sensor (not shown) provided in container 50 may be used as being combined.

The sensor that detects at least one of the amount of the sample accommodated in container 50 and the amount of the contaminant in the sample may be included on the outside of purification apparatus 1A, and purification apparatus 1A may obtain a detection value from the sensor and perform processing in S18 or later. In a more specific example, the user himself/herself can also measure at least one of the amount of the sample and the amount of the contaminant in the sample with the sensor on the outside of purification apparatus 1A and input a measurement value into purification apparatus 1A. Purification apparatus 1A configured to include the sensor that automatically detects at least one of the amount of the sample accommodated in container 50 and the amount of the contaminant in the sample, however, is superior in that time and efforts for obtaining the detection value are saved.

Purification apparatus 1A according to the modification can thus detect with the sensor, at least one of the amount of the sample introduced in container 50 and the amount of the contaminant in the sample. Purification apparatus 1A can then determine the amount of the decomposition substance to be introduced in each of the first introduction and the second introduction based on at least one of the amount of the sample and the amount of the contaminant in the sample. Time and efforts spent by the user to manually calculate the amount of the decomposition substance to be introduced in each of the first introduction and the second introduction based on the amount of the sample and the amount of the contaminant in the sample are thus saved. Therefore, it is easier for the user to appropriately complete decomposition with the decomposition solution and to reduce a contaminant residue in a mixed sample, with the use of purification apparatus 1.

As described with reference to Fig. 3, in purification apparatuses 1 and 1A, the decomposition solution is discharged in the last step (S26 in Figs. 5 to 7) of the decomposition treatment in container 50, thereafter container 50 is automatically cleaned, and thereafter the heavy solution is automatically introduced into container 50 for gravity separation of the sample. Since a contaminant residue has been reduced in purification apparatuses 1 and 1A owing to the decomposition treatment in the embodiment and the modification, possibility of interference by the remaining contaminant with gravity separation treatment or later is also lowered. Reliable decomposition treatment reduces an error in subsequent analysis and saves time and efforts for analysis of an extra contaminant. In other words, efficiency in purification processing as a whole in purification apparatuses 1 and 1A is improved.

### [Aspects]

Illustrative embodiments described above are understood by a person skilled in the art as specific examples of aspects below.

(Clause 1) A purification apparatus according to one aspect is a purification apparatus that purifies a sample. The purification apparatus includes a container and a controller. The sample is accommodated in the container, and a decomposition solution containing a decomposition substance that decomposes a contaminant in the sample is introduced into the container. The controller is configured to introduce the decomposition solution a plurality of times into the container. Introduction of the decomposition solution the plurality of times includes first introduction and second introduction that follows. An amount of the decomposition substance in the decomposition solution introduced in the second introduction is larger than an amount of the decomposition substance in the decomposition solution introduced in the first introduction.

According to the purification apparatus according to Clause 1, the decomposition solution is introduced into the container a plurality of times including first introduction and second introduction that follows, and the amount of the decomposition substance contained in the decomposition solution is larger in later introduction. Thus, in the first introduction in which a large amount of undecomposed contaminant is contained in the sample, the contaminant can gently be decomposed by a relatively small amount of the decomposition substance. Addition of a larger amount of the decomposition substance than in the first introduction while there is less undecomposed contaminant can reliably decompose the remaining contaminant. Therefore, decomposition with the decomposition solution can appropriately be completed and a contaminant residue in a mixed sample can be reduced.

(Clause 2) In the purification apparatus according to Clause 1, the controller is configured to perform decomposition treatment for a prescribed period after the first introduction, thereafter to discharge the decomposition solution from the container, and then to perform the second introduction.

According to the purification apparatus according to Clause 2, the decomposition solution introduced in the second introduction can be prevented from being diluted with the decomposition solution introduced in the first introduction. In addition, as a result of discharge of the contaminant decomposed in the first introduction, such a decomposed contaminant can be prevented from interfering with a decomposition reaction in next introduction.

(Clause 3) In the purification apparatus according to Clause 1 or 2, the controller is configured to control the amount of the decomposition substance introduced in the second introduction to be larger than the amount of the decomposition substance introduced in the first introduction, such that an amount of the decomposition solution introduced in the second introduction becomes larger than an amount of the decomposition solution introduced in the first introduction.

According to the purification apparatus according to Clause 3, by control of the amount of the decomposition solution, the amount of the decomposition substance introduced in the second introduction can be larger than the amount of the decomposition substance introduced in the first introduction.

(Clause 4) The purification apparatus according to Clause 3 further includes a decomposition solution reservoir to store the decomposition solution to be introduced into the container. The controller is configured to control the amount of the decomposition solution introduced from the decomposition solution reservoir into the container to be larger in the second introduction than in the first introduction.

According to the purification apparatus according to Clause 4, the purification apparatus controls the amount of the decomposition solution to be introduced from the decomposition solution reservoir into the container such that the amount of the decomposition solution to be introduced into the container is larger in the second introduction than in the first introduction. The decomposition solution to be introduced into the container can thus be controlled with a simplified configuration.

(Clause 5) The purification apparatus according to Clause 4 further includes a pump that introduces the decomposition solution from the decomposition solution reservoir into the container. The controller is configured to control the amount of the decomposition solution to be introduced into the container by controlling a rotation speed and a rotation time period of the pump.

According to the purification apparatus according to Clause 5, the pump that provides driving force for introduction of the decomposition solution into the container can also be applied to control of the amount of the decomposition solution to be introduced. In other words, the amount of the decomposition solution to be introduced can be controlled with a simplified configuration.

(Clause 6) In the purification apparatus according to any one of Clauses 1 to 5, the controller is configured to control the amount of the decomposition substance introduced in the second introduction to be larger than the amount of the decomposition substance introduced in the first introduction, by controlling a concentration of the decomposition solution introduced in the second introduction to be higher than a concentration of the decomposition solution introduced in the first introduction.

According to the purification apparatus according to Clause 6, by control of the concentration of the decomposition solution, the amount of the decomposition substance to be introduced in the second introduction can be larger than the amount of the decomposition substance to be introduced in the first introduction.

(Clause 7) The purification apparatus according to Clause 6 further includes a rinse solution reservoir for introduction of a rinse solution for rinsing the inside of the container. The controller is configured to control the concentration of the decomposition solution to be introduced into the container by causing the decomposition solution and the rinse solution introduced from the rinse solution reservoir to be mixed at a prescribed ratio.

According to the purification apparatus according to Clause 7, the rinse solution for cleaning of the container can also be applied to control of the concentration of the decomposition solution. In other words, the concentration of the decomposition solution can be controlled with a simplified configuration.

(Clause 8) The purification apparatus according to Clause 7 further includes a regulation valve an opening of which can be controlled to control the ratio of mixing. The controller is configured to control the ratio of mixing by controlling the opening.

According to the purification apparatus according to Clause 8, by control of the regulation valve, the concentration of the decomposition solution to be introduced into the container can be controlled. In addition, the regulation valve that switches between introduction of the decomposition solution into the container and introduction of the rinse solution into the container can also be applied to control of the concentration of the decomposition solution to be introduced into the container. In other words, the concentration of the decomposition solution can be controlled with a simplified configuration.

(Clause 9) In the purification apparatus according to any one of Clauses 1 to 8, the controller is configured to determine the amount of the decomposition substance to be introduced in each of the first introduction and the second introduction based on at least one of an amount of the sample introduced into the container and an amount of the contaminant in the sample.

According to the purification apparatus according to Clause 9, time and efforts spent by the user to manually calculate the amount of the decomposition substance to be introduced in each of the first introduction and the second introduction based on the amount of the sample and the amount of the contaminant in the sample are saved. Therefore, it is easier for the user to appropriately complete decomposition with the decomposition solution and to reduce a contaminant residue in the mixed sample, with the use of the purification apparatus.

(Clause 10) The purification apparatus according to Clause 9 further includes a sensor that detects at least one of the amount of the sample introduced into the container and the amount of the contaminant in the sample.

According to the purification apparatus according to Clause 10, time and efforts to obtain a detection value are saved as compared with an example in which the user himself/herself measures at least one of the amount of the sample and the amount of the contaminant in the sample with the sensor outside the purification apparatus and inputs a measurement value into the purification apparatus.

(Clause 11) The purification apparatus according to any one of Clauses 1 to 10 is configured to purify the sample by separation of the sample based on gravity separation by using a heavy solution after completion of decomposition of the contaminant by the decomposition solution.

According to the purification apparatus according to Clause 11, the purification apparatus can also be applied to a purification apparatus based on gravity separation. In addition, after decomposition treatment in the container, a step of transferring the sample to another container for gravity separation after discharge of the decomposition solution is not required. Since a contaminant residue has been reduced in the decomposition treatment, possibility of interference by the remaining contaminant with gravity separation treatment or later is also lowered. Reliable decomposition treatment reduces an error in subsequent analysis and saves time and efforts for analysis of an extra contaminant. In other words, efficiency in purification treatment as a whole is improved.

(Clause 12) A control method according to another aspect is a control method performed by a controller in a purification apparatus that purifies a sample. The purification apparatus includes a container and a controller. The sample is accommodated in the container, and a decomposition solution containing a decomposition substance that decomposes a contaminant in the sample is introduced into the container. The controller is configured to introduce the decomposition solution into the container a plurality of times, introduction of the decomposition solution including first introduction and second introduction. The control method includes performing the first introduction and performing the second introduction. In the performing the second introduction, an amount of the decomposition substance in the decomposition solution introduced in the second introduction is larger than an amount of the decomposition substance in the decomposition solution introduced in the first introduction.

According to the control method according to Clause 12, the decomposition solution is introduced into the container a plurality of times including first introduction and second introduction that follows, and the amount of the decomposition substance contained in the decomposition solution is larger in later introduction. Thus, in the first introduction in which a large amount of undecomposed contaminant is contained in the sample, the contaminant can gently be decomposed by a relatively small amount of the decomposition substance. Addition of a larger amount of the decomposition substance than in the first introduction while there is less undecomposed contaminant can reliably decompose the remaining contaminant. Therefore, decomposition with the decomposition solution can appropriately be completed and a contaminant residue in a mixed sample can be reduced.

It should be understood that the embodiments disclosed herein are illustrative and non-restrictive in every respect. The scope of the present invention is defined by the terms of the claims rather than the description above and is intended to include any modifications within the scope and meaning equivalent to the terms of the claims.

### REFERENCE SIGNS LIST

1, 1A purification apparatus; 11, 12, 13, 14, 15, 16, 17, 18, 19, 20, 21, 22, 23 pipe; 31, 32, 33 pump; 41, 42, 43 electromagnetic valve; 50 container; 55 discharge port; 61, 62, 63, 64 port; 71 stirrer; 72 stirring bar; 80 discharge pipe; 95 weight sensor; 100, 100A purification instrument; 110 decomposition solution reservoir; 120 heavy solution reservoir; 130 rinse solution reservoir; 140, 150 waste solution reservoir; 210 detection filter; 215 supernatant reservoir; 500 controller; 501 computing device; 502 memory; 503 communication device; 504 display device; 505 input device; 506 data reading device; 507 storage medium; 510 storage; 511 control program; 512 control data.

## Claims

1. A purification apparatus that purifies a sample, the purification apparatus comprising:
a container in which the sample is accommodated and into which a decomposition solution containing a decomposition substance that decomposes a contaminant in the sample is introduced; and
a controller that controls introduction of the decomposition solution, wherein
the controller is configured to introduce the decomposition solution a plurality of times into the container,
introduction of the decomposition solution the plurality of times includes first introduction and second introduction that follows, and
an amount of the decomposition substance in the decomposition solution introduced in the second introduction is larger than an amount of the decomposition substance in the decomposition solution introduced in the first introduction.

2. The purification apparatus according to claim 1, wherein
the controller is configured to perform decomposition treatment for a prescribed period after the first introduction, thereafter to discharge the decomposition solution from the container, and then to perform the second introduction.

3. The purification apparatus according to claim 1, wherein
the controller is configured to control the amount of the decomposition substance introduced in the second introduction to be larger than the amount of the decomposition substance introduced in the first introduction, such that an amount of the decomposition solution introduced in the second introduction becomes larger than an amount of the decomposition solution introduced in the first introduction.

4. The purification apparatus according to claim 3, further comprising a decomposition solution reservoir to store the decomposition solution to be introduced into the container, wherein
the controller is configured to control the amount of the decomposition solution introduced from the decomposition solution reservoir into the container to be larger in the second introduction than in the first introduction.

5. The purification apparatus according to claim 4, further comprising a pump that introduces the decomposition solution from the decomposition solution reservoir into the container, wherein
the controller is configured to control the amount of the decomposition solution to be introduced into the container by controlling a rotation speed and a rotation time period of the pump.

6. The purification apparatus according to claim 1, wherein
the controller is configured to control the amount of the decomposition substance introduced in the second introduction to be larger than the amount of the decomposition substance introduced in the first introduction, by controlling a concentration of the decomposition solution introduced in the second introduction to be higher than a concentration of the decomposition solution introduced in the first introduction.

7. The purification apparatus according to claim 6, further comprising a rinse solution reservoir for introduction of a rinse solution for rinsing inside of the container, wherein
the controller is configured to control the concentration of the decomposition solution to be introduced into the container, by causing the decomposition solution and the rinse solution introduced from the rinse solution reservoir to be mixed at a prescribed ratio.

8. The purification apparatus according to claim 7, further comprising a regulation valve an opening of which can be controlled to control the ratio of mixing, wherein
the controller is configured to control the ratio of mixing by controlling the opening.

9. The purification apparatus according to claim 1, wherein
the controller is configured to determine the amount of the decomposition substance to be introduced in each of the first introduction and the second introduction based on at least one of an amount of the sample introduced into the container and an amount of the contaminant in the sample.

10. The purification apparatus according to claim 9, further comprising a sensor that detects at least one of the amount of the sample introduced into the container and the amount of the contaminant in the sample.

11. The purification apparatus according to claim 1, wherein
the purification apparatus is configured to introduce a heavy solution into the container after completion of decomposition of the contaminant with the decomposition solution so as to separate and purity the sample based on gravity separation by using the heavy solution.

12. A control method performed by a controller in a purification apparatus that purifies a sample, the purification apparatus including a container in which the sample is accommodated and into which a decomposition solution containing a decomposition substance that decomposes a contaminant in the sample is introduced and a controller that controls introduction of the decomposition solution, the controller being configured to introduce the decomposition solution into the container a plurality of times, introduction of the decomposition solution including first introduction and second introduction, the control method comprising:
performing the first introduction; and
performing the second introduction, wherein
in the performing the second introduction, an amount of the decomposition substance in the decomposition solution introduced in the second introduction is larger than an amount of the decomposition substance in the decomposition solution introduced in the first introduction.
